# EUROPEAN PATENT APPLICATION

(11) **EP 3 587 938 A1**
(43) Date of publication of application: **01.01.2020**
(21) Application number: 19182253.5
(22) Date of filing: 25.06.2019
(51) Int. Cl.: F24F 1/0047, B01D 46/00, F24F 13/28, F24F 1/0073, F24F 3/16

(54) **FILTER CLEANING UNIT AND AIR CONDITIONER**

(30) Priority: 27.06.2018 JP 2018122245
(71) Applicant: MITSUBISHI HEAVY INDUSTRIES THERMAL SYSTEMS, LTD., 108-8215 Tokyo (JP)
(72) Inventor: MATSUMOTO, Souichirou, TOKYO, 108-8215 (JP)
(74) Representative: Cabinet Beau de Loménie

(57) **Abstract**

The present invention aims to enable a worker to perform a bolt tightening operation without supporting a frame part when attaching a filter cleaning unit to a panel part. A filter cleaning unit (16) includes a frame part (9); a brush fastening part (21) that is provided on the frame part (9) and stores a brush (17) placed along one direction of a filter (13); and a drive mechanism that is provided on the frame part (9) and moves the brush fastening part (21) in a direction perpendicular to the one direction and along a surface of the filter (13), wherein the frame part (9) includes: a fixed protruding part (50) that is fixedly formed to protrude from a first side portion (9A) of the frame part (9), and is supported by the panel part of an indoor apparatus; and a movable protruding part (51) that is formed to be capable of being drawn into and out from a second side portion (9B) of the frame part (9) different from the first side portion (9A), and is supported by the panel part when drawn out.

## Description

### [Technical Field]

The present invention relates to a filter cleaning unit and an air conditioner.

### [Background Art]

Some indoor units of ceiling-embedded type air conditioners include a filter cleaning unit that uses a brush to clean dust and dirt sticking to a filter installed in an intake opening. The brush has a length equal to the width of the filter and is moved along one direction of the filter by a drive mechanism having a motor.

Patent Literature 1 below discloses a technology of removing dust and dirt sticking to a filter by a cleaning unit including a brush unit that moves along the filter and cleans the filter, and a drive unit that drives the brush unit.

### [Citation List]

### [Patent Literature]

[PTL 1]
Japanese Unexamined Patent Application, Publication No. 2016-8754

### [Summary of Invention]

### [Technical Problem]

A filter cleaning unit has a filter cleaning unit frame (hereinafter referred to as the "frame part"), and the frame part may be detachably installed under a case main body. The frame part is provided with a filter, a brush, and a drive mechanism that moves the brush along the filter.

In conventional cases, in the filter cleaning unit, the frame part is fixed by a bolt to a panel part installed on the case main body of an indoor apparatus by inserting the bolt through a bolt hole formed in the frame part. In this case, when performing maintenance on the inside of the case main body of the indoor apparatus, a worker releases the bolted joint and detaches the filter cleaning unit from the panel part.

In the case where the bolt hole formed in the frame part has a simple circular shape, the worker is required to keep supporting the filter cleaning unit from below all the time during a bolt tightening operation, which is a hard work.

The bolt hole may be of a potbelly shape, and one end of the bolt hole may be larger than the diameter of the bolt head. In this case, before attaching the filter cleaning unit to the panel part, the bolt is screwed into the panel part to some extent. Thereafter, when attaching the filter cleaning unit to the panel part, the bolt head of the bolt fixed to the case main body is inserted into the one end side of the bolt hole in the frame part, and the frame part is slid to the other end side of the bolt hole. When further tightening the bolt after the sliding, since the frame part has been supported by the bolt screwed to some extent beforehand, it is possible to reduce power required for the worker to support the frame part. However, since the frame part is slidable with respect to the bolt during the bolt tightening operation, there is a possibility that the frame part may slide and the filter cleaning unit may be dropped depending on the work of the worker. Therefore, the worker needs to support the frame part with certain power to prevent the frame part from sliding.

The present invention has been made in view of such circumstances, and aims to provide a filter cleaning unit and an air conditioner which enable a worker to tighten bolts without supporting the frame part when attaching the filter cleaning unit to the panel part.

### [Solution to Problem]

A filter cleaning unit according to a first aspect of the present invention comprises: a frame part; a brush fastening part that is provided on the frame part and stores a brush placed along one direction of a filter; and a drive mechanism that is provided on the frame part and moves the brush fastening part in a direction perpendicular to the one direction and along a surface of the filter, wherein the frame part includes: a fixed protruding part that is fixedly formed to protrude from a first side portion of the frame part, and is supported by the panel part of an indoor apparatus; and a movable protruding part that is formed to be capable of being drawn into and out from a second side portion of the frame part different from the first side portion and is supported by the panel part when drawn out.

According to this configuration, the frame part is provided with the brush fastening part and the drive mechanism, and the brush fastening part stores the brush placed along one direction of the filter. The drive mechanism moves the brush fastening part in a direction perpendicular to the one direction of the filter and along the surface of the filter. The fixed protruding part is fixedly formed to protrude from the first side portion of the frame part, and the fixed protruding part is capable of engaging with the panel part of the indoor apparatus. Moreover, the movable protruding part is formed to be capable of being drawn into and out from the second side portion different from the first side portion of the frame part, and the movable protruding part is capable of engaging with the panel part when protruded.

Hence, in the state in which the movable protruding part is stored in the second side portion, the fixed protruding part provided on the first side portion of the frame part is supported with the panel part, and the frame part is lifted to a predetermined mount position in the panel part. Thereafter, the movable protruding part is drawn out from the second side portion, and the movable protruding part is engaged with the panel part. Consequently, the frame is in the state of being fixed to the panel part of the indoor apparatus by the fixed protruding part and the movable protruding part. Since the frame is unlikely to slide relative to a case main body, the possibility of dropping the filter cleaning unit when further fixing the frame to the case main body by bolts is decreased.

In the above aspect, the drive mechanism may include a motor; a shaft that is placed so that an axial direction of the shaft is perpendicular to the one direction of the filter, and is connected to the motor to be rotated around an axis by the motor; a nut that is joined to the shaft and moves along the axial direction of the shaft with the rotation of the shaft around the axis; two rack gears that are mounted on both sides in the one direction of the filter so that a longitudinal direction of the rack gears is perpendicular to the one direction of the filter; and two pinion gears that are mounted rotatably on the brush fastening part and engage with the respective rack gears, and the brush fastening part is connected to the nut.

According to this configuration, the shaft is placed so that the axial direction of the shaft is perpendicular to the one direction of the filter. The rotation of the motor rotates the shaft around the axis, and the nut joined to the shaft moves along the axial direction of the shaft with the rotation of the shaft around the axis. Consequently, the brush fastening part connected to the nut moves along the axial direction of the shaft in the direction perpendicular to the one direction of the filter.

Two pinion gears are rotatably mounted on the brush fastening part, and the pinion gears engage with two respective rack gears mounted on both sides in one direction of the filter. When the brush fastening part moves in a direction perpendicular to the one direction of the filter, the pinion gears move on the rack gears and are rotated in a driven manner. Since the brush fastening part is supported by the pinion gears and the rack gears on both sides in one direction of the filter, the brush fastening part and the brush are reliably moved. Only one motor needs to be installed, and the brush can be moved with a simple structure.

An air conditioner according to a second aspect of the present invention comprises the above-described filter cleaning unit.

### [Advantageous Effects of Invention]

According to the present invention, when attaching the filter cleaning unit to the panel part, the worker can perform bolt tightening operation without supporting the frame part.

### [Brief Description of Drawings]

FIG. 1 is a longitudinal sectional view showing an indoor unit of a ceiling-embedded type air conditioner according to one embodiment of the present invention.
FIG. 2 is a perspective view showing the indoor unit of the ceiling-embedded type air conditioner according to one embodiment of the present invention.
FIG. 3 is a perspective view showing a filter and a filter cleaning unit according to one embodiment of the present invention, as viewed from a lower surface side.
FIG. 4 is a perspective view showing the filter and the filter cleaning unit according to one embodiment of the present invention, as viewed from an upper surface side.
FIG. 5 is a longitudinal sectional view of the filter and the filter cleaning unit according to one embodiment of the present invention, showing a process of attaching the filter cleaning unit.
FIG. 6 is a longitudinal sectional view of the filter and the filter cleaning unit according to one embodiment of the present invention, showing the process of attaching the filter cleaning unit.
FIG. 7 is a longitudinal sectional view of the filter and the filter cleaning unit according to one embodiment of the present invention, showing a state in which the filter cleaning unit is attached.

### [Description of Embodiment]

Hereinafter, a ceiling-embedded type air conditioner according to one embodiment of the present invention will be described with reference to the drawings.

The ceiling-embedded type air conditioner (hereinafter referred to as the "air conditioner") includes an indoor unit (indoor apparatus) 1, an outdoor unit (outdoor apparatus) (not shown), a refrigerant pipe (not shown) connecting the indoor unit 1 and the outdoor unit, and so on.

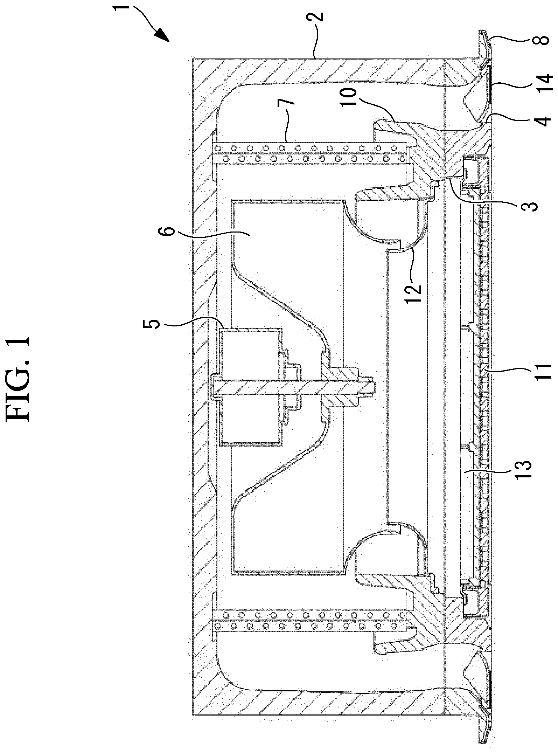

The indoor unit 1 is installed so that a case main body 2 is embedded in the ceiling. As shown in FIG. 1, the case main body 2 includes a heat exchanger 7, a drain pan 10, a motor 5, a fan 6, a bell mouth 12, etc. therein, and a panel part 8 to be exposed in the ceiling surface is attached to a lower section of the case main body 2.

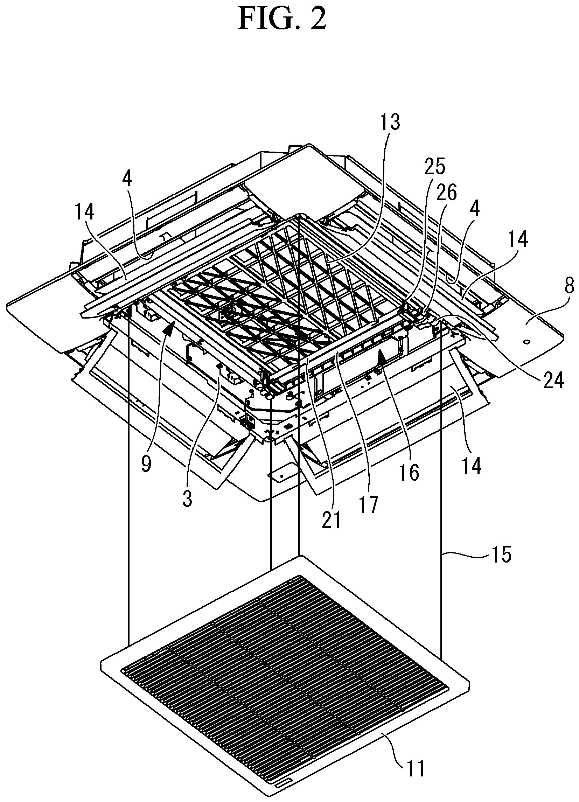

As shown in FIG. 1 and FIG. 2, an intake opening 3 is formed in a central section of a lower surface of the indoor unit 1, and a discharge opening 4 which is elongated in one direction along an outer peripheral section of the lower surface of the indoor unit 1 is formed at a position adjacent to the intake opening 3. In the intake opening 3, an intake grille 11 and a filter 13 above the intake grille 11 are installed. The drain pan 10 is installed under the heat exchanger 7 and receives drained water dripping from the heat exchanger 7. The bell mouth 12 is installed at a lower section of the drain pan 10.

When the air conditioner is operated, a refrigerant from the outdoor unit (not shown) circulates through the heat exchanger 7, and the fan 6 is driven by the motor 5. When the fan 6 is driven, room air passes from the intake opening 3 through the intake grille 11 and the filter 13 and is guided by the bell mouth 12 and drawn into the fan 6. The air discharged from the fan 6 is cooled or heated by passing through the heat exchanger 7, and then discharged from the discharge opening 4 into the room.

A louver 14 is elongated in one direction in conformity with the shape of the discharge opening 4, and the louver 14 is turned around an axis parallel to the longitudinal direction. Hence, an air flow discharged from the discharge opening 4 is directed upward or downward by changing the direction of the louver 14.

The filter 13 removes dust, dirt and the like contained in the drawn air. The filter 13 has a quadrangular shape like the intake opening 3, and is placed near the center of the intake opening 3. Moreover, at the four corners of a frame part of the intake grille 11, wires 15 that move up and down the intake grille 11 are placed.

The indoor unit 1 according to the present embodiment includes a filter cleaning unit 16. As shown in FIG. 2, on the lower surface of the filter 13, the filter cleaning unit 16 is installed on the panel part 8 and has a brush 17 which is equal to or longer than the length of one side of the filter 13 in one direction. The brush 17 of the filter cleaning unit 16 moves in contact with the surface of the filter 13 from a side at one end of the filter 13 to a side on the other end, thereby removing dust and dirt sticking to the filter 13. The filter cleaning unit 16 starts operating based on a control signal for operation control.

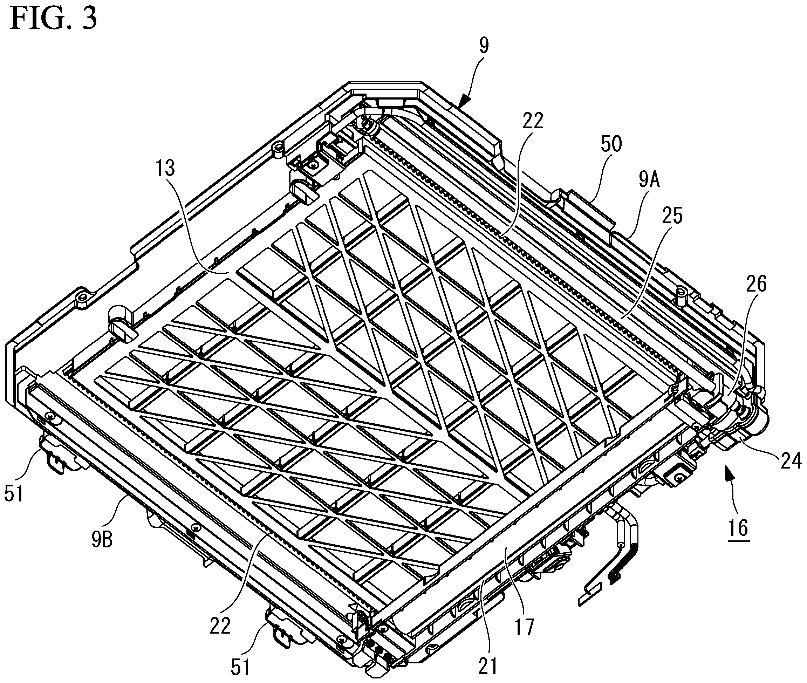

As shown in FIG. 2 and FIG. 3, the filter cleaning unit 16 includes a frame part 9 detachably installed on the panel part 8, the brush 17, a brush fastening part 21, and a motor 24, etc. installed on the frame part 9.

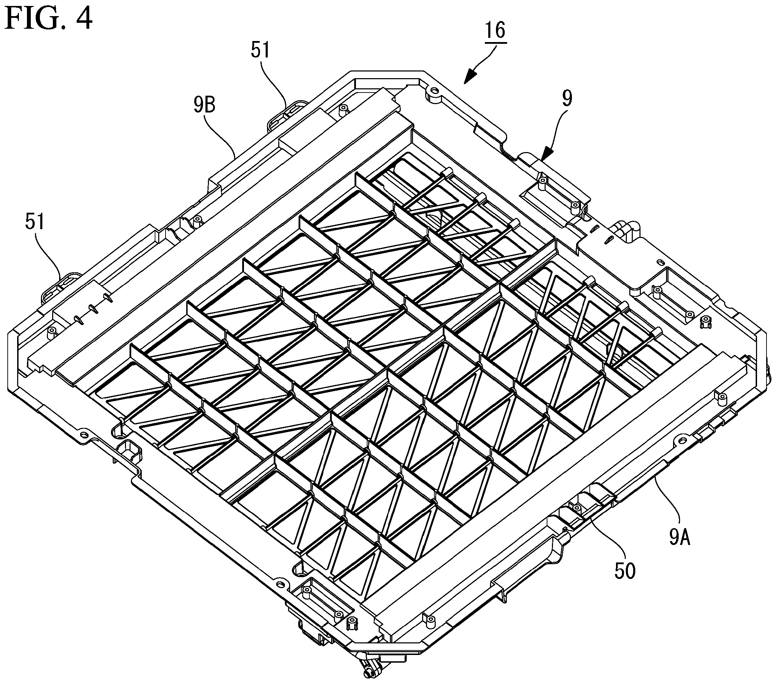

As shown in FIG. 2 to FIG. 4, the frame part 9 has a quadrangular shape like the intake opening 3, and is placed near the center of the intake opening 3. The filter 13 is installed on the frame part 9, and the frame part 9 can be attached to the panel part 8 and detached from the panel part 8. The frame part 9 is temporarily fastened by a fixed protruding part 50 and a movable protruding part 51 described later, and is further securely fixed to the panel part 8 by bolts.

As shown in FIG. 3 to FIG. 7, the fixed protruding part 50 is formed on a first side portion 9A on one side of the frame part 9. Moreover, the movable protruding part 51 is provided on a second side portion 9B on the opposite side to the one side where the fixed protruding part 50 is formed.

The fixed protruding part 50 protrudes from the inside to the outside of the first side portion 9A of the frame part 9, and is formed fixedly on the frame part 9. Corresponding to the fixed protruding part 50, a support part 52 in which the fixed protruding part 50 is inserted and placed is formed on the panel part 8. The fixed protruding part 50 is supported by the panel part 8 of the indoor unit 1.

The movable protruding part 51 is provided to be capable of being drawn into and out from the second side portion 9B of the frame part 9. Corresponding to the movable protruding part 51, a support part 53 in which the movable protruding part 51 is inserted and placed is formed on the panel part 8. The movable protruding part 51 is supported by the panel part 8 when the tip side is protruded outward from the second side portion 9B. The movable protruding part 51 is stored in the frame part 9 so that the tip is aligned with the end face of the second side portion 9B.

Hence, in the state in which the movable protruding part 51 is stored inside the frame part 9 at the second side portion 9B, the tip of the movable protruding part 51 is placed in the same plane as the end face of the second side portion 9B or on the inside of the end face, and the frame part 9 can be installed at a predetermined mount position without causing the movable protruding part 51 to touch the panel part 8. After the frame part 9 is mounted at the predetermined mount position and brought into a horizontal state, the movable protruding part 51 is supported with the support part 53 by protruding the movable protruding part 51 stored in the frame part 9.

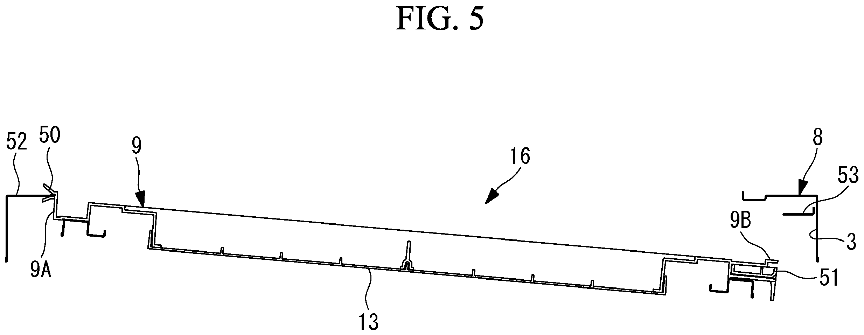

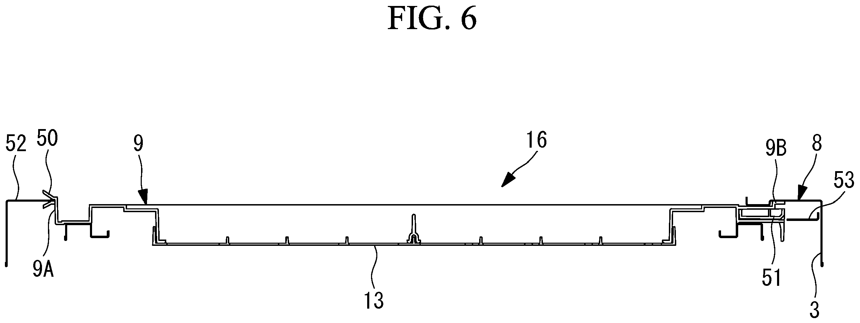

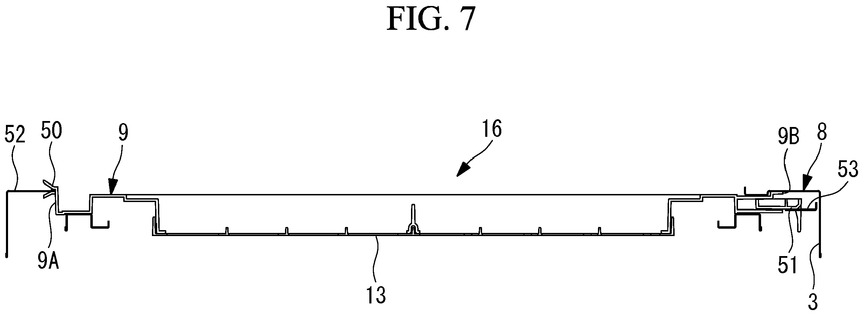

When attaching the frame part 9 to the panel part 8, as shown in FIG. 5, in the state in which the movable protruding part 51 is stored in the second side portion 9B, the fixed protruding part 50 provided on the first side portion 9A of the frame part 9 is supported with the support part 52 of the panel part 8, and, as shown in FIG. 6, the frame part 9 is lifted to the predetermined mount position in the intake opening 3 in the panel part 8. Thereafter, as shown in FIG. 7, when the frame part 9 is brought into a horizontal state, the movable protruding part 51 is drawn out from the second side portion 9B, and the movable protruding part 51 is supported by the support part 53 of the panel part 8. Consequently, the frame part 9 is in the state of being fixed to the panel part 8 of the indoor unit 1 by the fixed protruding part 50 and the movable protruding part 51.

In this state, in the filter cleaning unit 16, the frame part 9 is securely fixed by a bolt to the panel part 8 of the indoor unit 1 by inserting the bolt through a bolt hole formed in the frame part 9. In conventional cases, when the frame part of the filter cleaning unit is installed on the panel part, it is necessary to support the frame part from below to prevent the frame part from dropping and, even when the bolt hole is of a potbelly shape, it is also necessary to support the frame to prevent from slipping. However, according to the present embodiment, the load of the frame part 9 is temporarily supported by the fixed protruding part 50 and the movable protruding part 51 with respect to the panel part 8, and the frame part 9 is less likely to slide. Therefore, when further fixing the frame part 9 to the panel part 8 by bolts, the work required for the worker to support the frame part 9 from below and prevent unwanted slide is reduced, and the possibility of dropping the filter cleaning unit 16 is decreased.

The brush 17 has a shaft material elongated in one direction, and a large number of bristles arranged from one end to the other end in the axial direction on an outer circumferential surface of the shaft material. The brush 17 has brush rotating gears (not shown) that engage with respective pinion gears at both ends. Further, the brush 17 is supported by the brush fastening part 21 at the both ends.

As shown in FIG. 3, the brush fastening part 21 is a member elongated in a direction parallel to the axial direction of the brush 17, and stores the brush 17 therein. The brush fastening part 21 has a shape surrounding the brush 17 and exposes the brush 17 on the filter 13 side. A total of two pinion gears (not shown), one for each end section in the longitudinal direction of the brush fastening part 21, are rotatably mounted. The brush fastening part 21 is supported by rack gears 22 through the pinion gears. By moving the brush fastening part 21 along the rack gears 22, the brush fastening part 21 and the brush 17 move along the surface of the filter 13 from the side on one end of the filter 13 to the side on the other end.

Since the brush fastening part 21 is supported by the pinion gears and the rack gears 22 on both sides in one direction of the filter 13, the brush fastening part 21 and the brush 17 move reliably.

The pinion gear is installed in each end section of the brush fastening part 21. The pinion gear engages with the rack gear 22. As the brush fastening part 21 moves, the pinion gear moves on the rack gear 22, and is driven and rotated by a force transmitted from the rack gear 22. The rack gear 22 is installed on the outside of the filter 13 so that the axial direction is perpendicular to the axial direction of the brush 17. The length of the rack gear 22 is equal to or longer than the length of one side of the filter 13.

One brush rotating gear is provided for each pinion gear, and engages with the pinion gear. As the pinion gear rotates, the brush rotating gear is driven and rotated by a force transmitted from the pinion gear. As a result, the brush 17 mounted on the brush rotating gears is rotated, and the brush 17 is rotated along with the movement of the brush 17.

The pinion gear is a member which is not connected to the motor 24 and operates in a driven manner. In the present embodiment, since the pinion gears are mounted on the brush fastening parts 21, unlike Patent Literature 1, a propulsion shaft connecting two pinion gears is not necessary.

As shown in FIG. 3, only one set of drive mechanism including the pinion gear, the rack gear 22, the motor 24, a shaft 25 and a nut 26 needs to be placed along one side of the filter 13. The pinion gear, the rack gear 22, the motor 24, the shaft 25 and the nut 26 are one example of the drive mechanism.

The motor 24 is fixedly mounted on the frame part 9 of the filter cleaning unit 16. The motor 24 is connected to the shaft 25, and the shaft 25 rotates around the axis as the motor 24 is driven. The shaft 25 is a shaft material that is elongated in one direction and has a male thread formed on the outer circumferential surface of the shaft material, and engages with the nut 26. The shaft 25 is installed so that the axial direction is perpendicular to the axial direction of the brush 17, that is, in a direction parallel to the rack gear 22. The shaft 25 is equal to or longer than the length of one side of the filter 13 in one direction.

On the inner circumferential surface of the nut 26, a female thread, which engages with the male thread of the shaft 25, is formed. The nut 26 is connected to the brush fastening part 21 so as not to rotate around the axis of the shaft 25. Although the nut 26 is not fixed to the brush fastening part 21, the nut 26 is connected to the brush fastening part 21 so that the nut 26 can push the brush fastening part 21. Hence, as the shaft 25 rotates, the nut 26 moves, and the nut 26 pushes the brush fastening part 21 and moves along the axial direction of the shaft 25. By changing the rotation direction of the shaft 25, the advancing direction of the nut 26 and the brush fastening part 21 can be changed.

In the above-described example, an example in which the male thread is formed on the shaft 25 and the female thread is formed in the nut 26 and coupled together has been described, but the present invention is not limited to this example. For instance, the shaft 25 and the nut 26 may be configured to provide a ball screw mechanism with a combination of the shaft 25 and the nut 26.

In the present embodiment, only one motor 24 needs to be installed, and the brush 17 can be moved with a simple structure.

### [Reference Signs List]

- 1: Indoor unit (indoor apparatus)
- 2: Case main body
- 3: Intake opening
- 4: Discharge opening
- 8: Panel part
- 9: Frame part
- 9A: First side portion
- 9B: Second side portion
- 11: Intake grille
- 13: Filter
- 14: Louver
- 15: Wire
- 16: Filter cleaning unit
- 17: Brush
- 21: Brush fastening part
- 22: Rack gear
- 24: Motor
- 25: Shaft
- 26: Nut
- 50: Fixed protruding part
- 51: Movable protruding part
- 52: Support part
- 53: Support part

## Claims

1. A filter cleaning unit (16) comprising:
a frame part (9);
a brush fastening part (21) that is provided on the frame part (9) and stores a brush (17) placed along one direction of a filter (13); and
a drive mechanism that is provided on the frame part (9) and moves the brush fastening part (21) in a direction perpendicular to the one direction and along a surface of the filter (13),
wherein the frame part (9) includes:
a fixed protruding part (50) that is fixedly formed to protrude from a first side portion (9A) of the frame part (9), and is configured to be supported by the panel part (8) of an indoor apparatus (1); and
a movable protruding part (51) that is formed to be capable of being drawn into and out from a second side portion (9B) of the frame part (9) different from the first side portion (9A) and is configured to be supported by the panel part (8) when protruded.

2. The filter cleaning unit (16) according to claim 1, wherein
the drive mechanism includes:
a motor (24);
a shaft (25) that is placed so that an axial direction of the shaft is perpendicular to the one direction of the filter (13), and is connected to the motor (24) to be rotated around an axis by the motor (24);
a nut (26) that is joined to the shaft (25) and is configured to move along the axial direction of the shaft (25) with the rotation of the shaft (25) around the axis;
two rack gears (22) that are mounted on both sides in the one direction of the filter (13) so that a longitudinal direction of the rack gears is perpendicular to the one direction of the filter (13); and
two pinion gears that are mounted rotatably on the brush fastening part (21) and engage with the respective rack gears (22), and
the brush fastening part (21) is connected to the nut (26) .

3. An air conditioner comprising the filter cleaning unit (16) according to claim 1 or 2.
